# EUROPÄISCHE PATENTSCHRIFT

(11) **EP 3 377 833 B1**
(45) Veröffentlichungstag und Bekanntmachung des Hinweises auf die Patenterteilung: **07.06.2023**
(21) Anmeldenummer: 16809295.5
(22) Anmeldetag: 17.11.2016
(51) Int. Cl.: F25D 16/00, F25D 31/00, F25B 21/02, F28D 20/02, F28D 7/02, F28D 21/00, F28F 1/40, F28F 21/06

(54) **VORRICHTUNG ZUM KÜHLEN EINER FLÜSSIGKEIT SOWIE VERWENDUNG DER VORRICHTUNG ALS BAUTEIL FÜR EINE VORRATSANORDNUNG**
APPARATUS FOR COOLING A LIQUID AND USE OF THE APPARATUS AS COMPONENT FOR A RESERVOIR
APPAREIL DE REFROIDISSEMENT D'UN LIQUIDE AINSI QUE UTILISATION DE L'APPAREIL COMME ÉLÉMENT DANS UN RÉSERVOIR

(30) Priorität: 17.11.2015 DE 102015119858
(43) Veröffentlichungstag der Anmeldung: 26.09.2018
(73) Patentinhaber: Sonnenrein, Gerrit, 33102 Paderborn (DE)
(72) Erfinder: Sonnenrein, Gerrit, 33102 Paderborn (DE)
(74) Vertreter: Patentanwälte Bauer Vorberg Kayser
(86) Internationale Anmeldenummer: PCT/EP2016/078074
(87) Internationale Veröffentlichungsnummer: WO 2017/085224

(56) Entgegenhaltungen:
- WO-A1-2006/034829
- WO-A1-2016/008716
- WO-A2-2013/041841
- DE-A1-102013 215 255
- US-A1- 2002 162 339

## Beschreibung

Die vorliegende Erfindung betrifft eine Vorrichtung zum Kühlen einer Flüssigkeit, insbesondere eines Nahrungsmittels wie Getränkes, sowie die Verwendung der Vorrichtung als Bauteil für eine Vorratsanordnung zur Aufnahme der Flüssigkeit.

Kühlvorrichtungen für wässrige Flüssigkeiten, insbesondere für Getränke, sind aus dem Stand der Technik bekannt. Ein übergeordnetes Ziel ist dabei, Wärme aus der zu kühlenden Flüssigkeit abzuführen. Hierzu sind aus dem Stand der Technik verschiedene Vorrichtungen und Techniken bekannt. Beispielsweise ist bekannt, dass bei Kühlvorrichtungen zum Kühlen von Trinkwasser und Getränken thermoelektrische Module wie Peltier-Elemente zur Anwendung kommen. Ein Peltier-Element ist ein thermoelektrischer Wandler, der basierend auf dem Peltier-Effekt bei Stromdurchfluss eine Temperaturdifferenz oder bei Temperaturdifferenz einen Stromfluss erzeugt. Peltier-Elemente können sowohl zur Kühlung als auch - bei Stromrichtungsumkehr - zum Heizen verwendet werden.

Nachteilig bei der Anwendung von thermoelektrischen Modulen, wie beispielsweise Peltier-Elementen, ist, dass diese nur eine relativ geringe Kühlungs- beziehungsweise Wärmekapazität pro Zeiteinheit bereitstellen können.

Eine weitere Möglichkeit, Wärme aus einer Flüssigkeit abzuführen, bietet der Einsatz von Latentwärmespeichern. Diese bieten die Möglichkeit der Speicherung thermischer Energie mit relativ hoher Energiedichte. Dabei wird die Schmelzbeziehungsweise Erstarrungsenthalpie von Materialien genutzt, deren Schmelz-/Erstarrungstemperatur im Bereich der Anwendungs-/Umwandlungstemperatur der eingesetzten Prozesse liegt. Solche Materialien werden auch Englisch als Phase Change Material, kurz PCM, bezeichnet.

Ein PCM hat einen jeweils für diese Verbindung typischen Temperaturbereich, in dem es als Wärmespeicher und/oder Kühlelement einsetzbar ist. Es hat dabei eine charakteristische Übergangstemperatur. Bei Temperaturen darüber nimmt das PCM die Wärme auf und verändert sich, hält aber die Temperatur konstant. Beispielsweise wird so gewährleistet, dass es eine bestimmte Wärmeenergie aufnehmen kann, bevor die Temperatur des Materials ansteigt. Die Wärmekapazität ist jedoch begrenzt, wodurch es nicht möglich ist, eine kontinuierliche Wärmeaufnahme bereitzustellen. Ein Latentwärmespeicher bedarf immer wieder einer Regeneration.

Es sind PCM's bekannt, die verschiedene Phasenübergänge durchlaufen und in den jeweiligen PCM-materialtypischen Temperaturbereichen hohe Wärmeeinspeicherungskapazitäten bereitstellen. Die Phasenübergänge der PCM's können dabei verschieden ausgebildet sein. Beispielsweise gibt es Fest/Fest-Übergänge, die als Übergang von einer Kristallmodifikation zu einer anderen ausgestaltet sind. Weiterhin sind beispielsweis Fest/Flüssig-Phasenübergänge, wie beim Schmelzen, bekannt. Es ist jedoch nachteilig, dass ein PCM je nach seiner vorliegenden Phase nicht als ein Festkörper vorliegen kann und deshalb nicht an einem Körper als Bauteil montiert werden kann. Hierzu ist immer eine andere Vorrichtung notwendig, welche das PCM beinhaltet oder aufweist. Weiterhin ist nachteilig, dass ein PCM einen gewissen Dampfdruck hat. Außerdem wird Gefahr gelaufen wird, dass ein PCM, wenn es die Phase wechselt, eventuell auch den thermischen Kontakt zu dem zu kühlenden Medium dadurch verliert, dass es beispielsweise in einem Raum schwerkraftbedingt nach unten fällt oder läuft. So können sich Luftspalte zwischen dem zu kühlenden Medium und dem PCM bilden. Die meisten PCM's neigen auch dazu, eine sehr schlechte Wärmeleitfähigkeit aufzuweisen. Dieses Problem verstärkt noch eine eventuelle Spaltausbildung zu dem zu kühlenden Medium.

Folglich ergibt sich im Stand der Technik die Problematik, dass ein PCM nicht in beliebiger Lage montiert werden kann.

Aufgabe der vorliegenden Erfindung ist es daher, eine Vorrichtung zum Kühlen von wässrigen Flüssigkeiten, insbesondere von Getränken, bereit zu stellen, die die Nachteile des Stands der Technik überwindet. Insbesondere ist es Aufgabe der vorliegenden Erfindung, eine Vorrichtung zum Kühlen einer Flüssigkeit bereit zu stellen, welche ihre Funktion unabhängig von der Montagelage bereitstellt.

Diese Aufgabe wird mit einer Vorrichtung zum Kühlen einer Flüssigkeit mit den Merkmalen des Anspruchs 1 sowie einer Verwendung der Vorrichtung als Bauteil für eine Vorratsanordnung mit den Merkmalen des Anspruchs 23 gelöst. Vorteilhafte weitere Ausgestaltungen sind jeweils in den Unteransprüchen angegeben.

Erfindungsgemäß wird eine Vorrichtung zum Kühlen einer Flüssigkeit, insbesondere eines Getränks, vorgeschlagen. Die Vorrichtung weist einen Kältespeicher und eine thermische Leitung auf, wobei der Kältespeicher und die zu kühlende Flüssigkeit über die thermische Leitung in thermischer Verbindung stehen und wobei der Kältespeicher ein Phasenwechselmaterial aufweist. Die Vorrichtung weist dabei auch Mittel zum Abführen von Wärme aus wenigstens der thermischen Leitung auf. Der Kältespeicher weist ferner ein Trägermaterial auf, in das das Phasenwechselmaterial eingebunden ist, wobei das Trägermaterial ein Polymer aufweist, das als Blockcopolymer vorliegt.

"Kühlen" oder "Zuführen von Kälte" in diesem Zusammenhang ist auch als "Abführen von Wärme" zu verstehen. Weiterhin ist "Wärme" auch als "Fehlen von Kälte" und "Kälte" auch als "Fehlen von Wärme" zu verstehen.

Als Phasenwechselmaterial in diesem Zusammenhang ist ein sogenannter Latentwärmespeicher beziehungsweise ein Phase Change Material, PCM, zu verstehen. Beispielsweise wird bei diesen Materialien die Schmelz- beziehungsweise Erstarrungsenthalpie in der Anwendungs-/Umwandlungstemperatur der eingesetzten Prozesse genutzt.

Im Folgenden ist sowohl "Material" als auch "Matrixmaterial" als ein Trägermaterial zu verstehen, in das das PCM eingebunden ist.

Als "eingebunden" in diesem Zusammenhang ist zu verstehen, dass das PCM oder eine Verkapselung, in der das PCM eingeschlossen ist, in der Formulierung von dem Trägermaterial so umschlossen wird, dass kein Ausdampfen, Ausschwitzen oder Ausbluten des PCM's in den verschiedenen Aggregatzuständen, die es im Betrieb einnimmt, erfolgt.

Durch das Einbinden des Phasenwechselmaterials in ein anderes Material wird vermieden, dass sich das Phasenwechselmaterial je nach Aggregatzustand und Einbauposition der Vorrichtung verschieben oder verlagern kann, wie beispielsweise ein Heruntersickern in flüssiger oder viskoser Form. Dadurch wird auch vermieden, dass es zu mangelndem thermischem Kontakt zwischen der thermischen Leitung und dem PCM z.B. durch Ausbildung von räumlichen Beabstandungen zwischen der thermischen Leitung und dem PCM kommt.

Grundsätzlich ist es möglich, dass ein PCM einem anderen Material zugemischt wird. Weiterhin kann das PCM in verkapselter Form einem anderen Material zugesetzt werden. Außerdem ist es möglich, dass ein PCM von einem anderen Material sorbiert wird. Darüber hinaus kann ein PCM in ein anderes Material in Lagen eingebracht werden, oder ein anderes Material kann Poren oder Hohlräume aufweisen, in die ein PCM eingebracht ist.

Weiterhin kann das PCM auch in eine Matrix eingebunden sein. Dazu ist es beispielsweise denkbar, dass das PCM selbst, oder eine Verkapselung des PCM's, reaktive Gruppen zur Anbindung des PCM's an ein anderes Material aufweist.

Erfindungsgemäß ist das Phasenwechselmaterial in ein Polymer als Träger- bzw. Matrixmaterial eingebunden. Dabei ist es bevorzugt, dass die Zusammensetzung ausschwitzarm oder sogar ausschwitzfrei ist. Eine Einbringung eines Phasenwechselmaterials in ein Polymer kann beispielsweise mit einem Extrusionsverfahren erfolgen, wie beispielsweise bei Paraffin als Phasenwechselmaterial.

Als Phasenwechselmaterial kommen beispielsweise natürliche sowie synthetische Paraffine in Betracht, beispielsweise mit einem Schmelzpunkt von 0 bis 20°C, bevorzugt von 0 bis 10°C und besonders bevorzugt von ca. 5°C.

In einer weiteren Ausgestaltungsform der Erfindung weist das PCM ein Paraffin auf. Das Paraffin kann beispielsweise ein natürliches und/oder ein synthetisches Paraffin aufweisen.

Besonders bevorzugt ist dabei, dass das PCM in einem Trägermaterial gleichmäßig verteilt ist. Eine solche Verteilung kann beispielsweise durch eine im Wesentlichen gleichmäßige Einmischung des PCM in ein Trägermaterial erfolgen. Außerdem kommen beispielsweise auch chemische Verbindungen zwischen PCM und einem Trägermaterial in Betracht. Zusätzlich ist es auch möglich, dass das PCM indirekt, beispielsweise über eine Verkapselung, an das Trägermaterial angebunden wird.

"Gleichmäßig" in diesem Zusammenhang bedeutet, dass das PCM über den Kältespeicherspeicher verteilt ist und im Wesentlichen einen konstanten Anteil bezogen auf eine feste Größe des Kältespeichers oder des Trägermaterials aufweist. Beispielsweise ist ein konstanter Gewichtsanteil (Gew.%.) oder Volumenanteil (Vol.%) des PCM bezogen auf den Kältespeicher oder das Trägermaterial möglich.

Erfindungsgemäß weist das Trägermaterial ein Polymer auf. Das Polymer liegt ein Blockpolymer vor.

Als Polymerblendist eine Mischung aus zwei oder mehreren unterschiedlichen Polymeren zu verstehen. Die Mischung ist dabei physikalischer Natur, sodass keine neuen chemischen Bindungen zwischen den polymeren Makromolekülen entstehen.

Als Blockpolymer in diesem Zusammenhang ist eine Polymerisation von Monomeren ohne ein zusätzliches Lösungsmittel zu verstehen.

Das Trägermaterial kann Polymere aus der Gruppe LDPE (Low Density Polyethylene), HDPE (High Density Polyethylene), PMMA (Polymethylmethacrylat), Polycarbonat und/oder Blockcopolymere, insbesondere Styrol-Blockcopolymere, und Mischungen davon aufweisen.

In einer weiteren Ausgestaltungsform der Erfindung beträgt das Gewicht des Trägermaterials bezogen auf das Gewicht des Kältespeichers 1 bis 10 Gew.%. In anderen Ausgestaltungsformen kann das Gewicht des Trägermaterials bezogen auf das Gewicht des Kältespeichers auch 1 bis 25 Gew.% oder bevorzugt 1 bis 20 Gew.% betragen.

Da PCMs in vielen Ausführungsformen eine geringe Wärmeleitfähigkeit aufweisen, ist es dabei auch besonders vorteilhaft, wenn das Träger- beziehungsweise Matrixmaterial besonders gut wärmeleitfähig ist, oder die Wärmeleitfähigkeit durch geeignete Füllstoffe erhöht ist, damit die Wärme, beziehungsweise Kälte, zu dem PCM hin- und abtransportiert werden kann.

Dabei ist es vorteilhaft, wenn es keine oder nur sehr geringe Wechselwirkungen des PCM's mit einem Träger-, Matrix- oder Kapselmaterial gibt. Insbesondere soll dabei vermieden werden, dass eine Wärmeeinspeicherungskapazität vermindert wird.

Grundsätzlich soll dabei das Phasenwechselmaterial so in ein anderes Material, hier auch Träger- und/oder Matrixmaterial genannt, eingebettet werden, dass das Phasenwechselmaterial so über das Material verteilt und in diesem eingebunden ist, dass die oben beschriebenen nachteiligen Eigenschaften und Effekte des Phasenwechselmaterials vermieden werden. Dabei soll dieses im Trägermaterial eingeschlossen, beziehungsweise eingebunden, sein und in jedem Aggregatzustand, welchen das PCM einnimmt, im Trägermaterial verbleiben. Gleichzeitig soll von dem Trägermaterial auch gewährleistet werden, dass eine Wärme von der thermischen Leitung zu dem PCM hin beziehungsweise zurück transportiert wird. Dabei gibt die zu kühlende Flüssigkeit Wärme an die thermische Leitung ab.

Als Matrixmaterial eignen sich grundsätzlich Polymere, insbesondere elastomer aushärtende Polymere.

Durch elastomere Materialien kann die Anbindung des PCM's oder die Anbindung des Verkapselungsmaterials des PCM's im Matrixmaterial verbessert werden.

In einer weiteren Ausgestaltungsform der Erfindung weist das Trägermaterial ein Additiv auf.

Bevorzugter Weise verbessert das Additiv die Wärmeleitfähigkeit des Kältespeichers. Dabei können beispielsweise Karbonstrukturen in ein Träger-/ oder Matrixmaterial mit eingearbeitet werden. Weiterhin ist es auch vorteilhaft Metallfasern, Metallschäume, Metalloxide oder keramische Strukturen mit in das Trägermaterial des Kältespeichers einzuarbeiten. Besonders bevorzugt ist beispielsweise Graphit als Additiv.

In einer weiteren Ausgestaltungsform der Erfindung kommen insbesondere graphitische Materialien, bevorzugt expandierter Graphit, als Additiv zum Einsatz.

Beispielsweise beträgt der Anteil dieser Additive etwa 5 bis 10 Gew.% bezogen auf den Kältespeicher.

Die vorliegende Erfindung optimiert dabei die Eigenschaften von kontinuierlich arbeitenden Mitteln zum Abführen von Wärme, wie beispielsweise thermoelektrischen Elementen, und eines zusätzlichen Kältespeichers.

Die maximal abführbare Wärmeleistung der zu kühlenden Flüssigkeit ergibt sich aus der Leistung der Mittel zum Abführen von Wärme und der Leistung an Kälte, die der Kältespeicher in regeneriertem Zustand maximal freigeben kann. Diese können jeweils über die thermische Leitung Kälte der zu kühlenden Flüssigkeit zuführen. Weiterhin können die Mittel zum Abführen von Wärme auch Wärme aus dem Kältespeicher zur Regeneration des PCM abführen.

Ein thermoelektrisches Modul als Mittel zum Abführen von Wärme aus der thermischen Leitung funktioniert normalerweise am besten bei einer stetigen, aber relativ geringen, Wärmeabtransportleistung. Diese relativ geringe Wärmeabtransportleistung stellt dabei die maximale Kühlleistung des thermoelektrischen Moduls dar.

Ein Kältespeicher wiederum ist eine passive Komponente, die entweder Wärme oder Kälte speichern kann. Der Kältespeicher kann dabei Wärme bzw. Kälte nur bis zu seiner konstruktions- bzw. gestaltungsbedingten Kapazität aufnehmen oder freisetzen.

Es ist vorgesehen, dass die Mittel zum Abführen von Wärme sowohl Wärme aus der zu kühlenden Flüssigkeit als auch Wärme aus dem Kältespeicher abführen können. Dabei ist auch gemeint, dass dies gleichzeitig passieren kann und soll. Dabei wird Wärme aus dem Kältespeicher abgeführt, bis dieser voll aufgeladen ist. Sodann kann der Kältespeicher Wärme relativ schnell von der zu kühlenden Flüssigkeit über die thermische Leitung aufnehmen.

Die Mittel zum Abführen von Wärme dienen dabei zur kontinuierlichen Abfuhr von Wärme aus der thermischen Leitung, jedoch mit einer relativ geringen Wärmeabfuhrleistung. Die abzuführende Wärme kann dabei von der zu kühlenden Flüssigkeit oder dem Kältespeicher oder von beiden stammen.

Bei erhöhtem Bedarf an Kühlleistung nimmt der Kältespeicher zusätzliche Wärme auf. Der Kältespeicher kann aber nur eine begrenzte Menge an Wärme aufnehmen. Die Aufnahmecharakteristik ist dergestalt, dass der Kältespeicher gegebenenfalls auch innerhalb eines kurzen Zeitraums eine relativ große Menge an Wärme aufnehmen kann - bis die maximale Wärmeaufnahmekapazität des Kältespeichers erreicht wird. Danach muss wieder Wärme aus dem Kältespeicher abgeführt werden, um diesen zu regenerieren beziehungsweise wieder "aufzuladen", damit dieser in einem weiteren Zyklus erneut eine relativ große Menge an Wärme aufnehmen kann.

In einer weiteren Ausführungsform der Erfindung grenzen der Kältespeicher und die thermische Leitung wenigstens bereichsweise aneinander.

Durch die Grenzfläche wird die Wärmeübertragungsrate zwischen der thermischen Leitung und dem Kältespeicher beeinflusst. Dabei kann beispielsweise durch eine größere Grenzfläche ein besserer Wärmetransfer zwischen der thermischen Leitung und dem Kältespeicher erreicht werden.

Durch ein direktes Angrenzen der zu kühlenden Flüssigkeit an die thermische Leitung kann die Wärmetransferleistung zwischen der zu kühlenden Flüssigkeit und der thermischen Leitung optimiert werden.

Hierzu kann die thermische Leitung eine integrale Struktur aufweisen, um die zu kühlende Flüssigkeit zu führen.

Es kann weiter vorgesehen sein, dass die zu kühlende Flüssigkeit beispielsweise in einer Leitungsstruktur für Flüssigkeiten in der thermischen Leitung entlanggeführt wird.

Diese Leitungsstruktur kann beispielsweise als eine Wendel ausgeführt sein.

Weiterhin kann auch vorgesehen sein, dass die zu kühlende Flüssigkeit in verschiedenen Aussparungen an der thermischen Leitung entlang, in der thermischen Leitung oder durch die thermische Leitung hindurch geführt wird.

Weiterhin kann auch vorgesehen sein, dass die zu kühlende Flüssigkeit aus einem Vorratsbehälter oder einer Frischwasserquelle entnommen wird und in thermischen Kontakt mit der thermischen Leitung gebracht wird.

Es kann auch vorgesehen sein, dass die Flüssigkeit, welche bereits durch thermischen Kontakt mit der thermischen Leitung gekühlt wurde, zu Bevorratungszwecken in einen Vorratsbehälter hineingeleitet wird.

Weiterhin kann vorgesehen sein, dass der thermischen Leitung technische Einrichtungen vor- oder bevorzugt nachgeschaltet sind, die zu einer Anreicherung der Flüssigkeit mit CO₂, d.h. zu einer Karbonisierung der Flüssigkeit, vorgesehen sind.

Eine solche technische Einrichtung kann z.B. eine Mischkammer für eine Durchlauf-Karbonisierung sein, die auch als Inline-Karbonisierung bezeichnet wird.

Eine solche technische Einrichtung kann aber auch eine Ausbildung eines Vorratsbehälters für die zu kühlende oder bevorzugt für die bereits gekühlte Flüssigkeit als Windkessel insbesondere mit zugeordneter CO₂-Quelle sein.

Bevorzugter Weise weist die thermische Leitung dabei ein wärmeleitfähiges Material auf. Besonders bevorzugt ist, dass die thermische Leitung aus einem wärmeleitfähigen Material gefertigt ist. Dazu eignen sich beispielsweise Metalle. Insbesondere Aluminium oder Kupfer sind auf Grund ihrer Wärmeleitfähigkeit geeignet.

Die thermische Leitung kann dabei als separates Bauteil ausgestaltet sein, oder in ein anderes Bauteil integriert sein.

Es kann beispielsweise vorgesehen sein, dass die thermische Leitung in einem Guss oder Druckgussverfahren hergestellt wird.

Weiterhin kann die thermische Leitung eine Oberflächenstruktur zur Vergrößerung der effektiven Wärmeübertragungsfläche aufweisen. Diese kann beispielsweise als Lamellen ausgestaltet sein. Besonders vorteilhaft ist dabei, wenn die Bereiche der thermischen Leitung mit Oberflächenstruktur wenigstens in einem ersten Bereich vorhanden sind, in dem die thermische Leitung an den Kältespeicher angrenzt. So kann die Wärmeleitfähigkeit zwischen der thermischen Leitung und dem Kältespeicher durch eine vergrößerte Oberfläche der thermischen Leitung verbessert werden.

In einer weiteren Ausgestaltungsform der Erfindung ist vorgesehen, dass die Mittel zum Abführen von Wärme ein thermoelektrisches Element oder Modul aufweisen. Beispielsweise kommen hier Peltier-Elemente in Betracht.

Weiterhin kann vorgesehen sein, dass die Mittel zum Abführen von Wärme an die thermische Leitung angrenzen, insbesondere in direktem thermischem Kontakt stehen.

Zudem können die Mittel zum Abführen von Wärme auch einen Ventilator aufweisen, um eine Wärmeabfuhr in die Umgebung durch einen an den Mitteln vorbeistreichenden Luftstrom zu verbessern.

In einer weiteren Ausgestaltungsform der Erfindung weist die Vorrichtung eine Isolierung auf.

Es kann vorgesehen sein, dass die Isolierung an den Kältespeicher angrenzt. Die Isolierung soll dabei den Kältespeicher in den Bereichen umgeben, in denen er nicht an die thermische Leitung angrenzt. Dadurch wird vermieden, dass der Kältespeicher Kälte an einen Außenbereich abgibt. Diese Kälte würde dann nicht mehr zur Zuführung der zu kühlenden Flüssigkeit bereit stehen.

Darüber hinaus kann im Wesentlichen die gesamte Vorrichtung in eine Isolierung eingebettet sein.

Eine Isolierung kann beispielsweise ein geschäumtes Material umfassen.

Des Weiteren kann eine Isolierung ein Luftpolter oder ein Vakuum aufweisen.

Außerdem kann eine Isolierung kältereflektierende Mittel aufweisen.

Als Material für eine Isolierung kommen insbesondere expandierte Schaumstoffe aus Polystyrol (EPS), Polypropylen (EPP) oder Polyethylen (EPE), bevorzugt aus Polyurethan (PUR) in Betracht. Weiterhin sind Kombinationen der zuvor genannten Materialien möglich.

Die Isolierung kann ein Paneel aufweisen, insbesondere ein Vakuum-Isolations-Paneel.

In einer weiteren Ausgestaltungsform der Erfindung weist die Vorrichtung einen Vorratsbehälter zur Aufnahme der Flüssigkeit auf. Dabei grenzt vorzugsweise die thermische Leitung an den Vorratsbehälter an. Der Vorratsbehälter und die thermische Leitung können dabei in thermischer Verbindung stehen oder aber gegeneinander isoliert sein.

Es kann sinnvoll sein, dass der Vorratsbehälter und die thermische Leitung in thermischer Verbindung stehen, wenn der Vorratsbehälter eine bereits gekühlte Flüssigkeit nach deren Kühlung aufnimmt.

Weiterhin kann es auch vorteilhaft sein, wenn der Vorratsbehälter und die thermische Leitung gegeneinander thermisch isoliert sind. Dies kann beispielsweise von Vorteil sein, wenn der Vorratsbehälter dazu vorgesehen ist, eine nicht gekühlte Flüssigkeit aufzunehmen. Dies kann auch vorteilhaft sein, wenn der Vorratsbehälter eine Temperatur aufweist, die höher liegt als die Temperatur, auf die die Flüssigkeit gekühlt werden soll.

Beispielsweise kann der Vorratsbehälter dazu eingerichtet sein, eine zu kühlende Flüssigkeit bereit zu halten. Diese kann beispielsweise aus dem Vorratsbehälter entnommen werden, und der thermischen Leitung zur Kühlung zugeführt werden. Anschließen kann die Flüssigkeit beispielsweise einer Entnahmestelle zugeführt werden.

In einer alternativen Ausgestaltung kann der Vorratsbehälter dazu eingerichtet sein, die bereits gekühlte Flüssigkeit bereit zu halten. Diese kann beispielsweise dadurch erzeugt werden, dass eine ungekühlte Flüssigkeit aus einem weiteren Vorratsbehälter für ungekühlte Flüssigkeit oder einer Frischwasserquelle entnommen wird und der thermischen Leitung zur Kühlung zugeführt wird. Die gekühlte Flüssigkeit wird dann dem Vorratsbehälter zur Bevorratung zugeführt. Anschließend kann die gekühlte Flüssigkeit dem Vorratsbehälter entnommen und einer Entnahmestelle, z.B. einem Zapfhahn bzw. einer Zapfstelle zugeführt werden.

Weiterhin ist bevorzugt, dass der Vorratsbehälter innerhalb der thermischen Leitung angeordnet ist, wobei die thermische Leitung den Vorratsbehälter umschließt.

In einer weiteren Ausführungsform kann vorgesehen sein, dass die thermische Leitung den Vorratsbehälter als integraler Bestandteil bildet.

In einer bevorzugten Ausgestaltungsform der Erfindung ist die thermische Leitung im Wesentlichen als Hohlzylinder ausgestaltet.

Ebenso kann die thermische Leitung aber auch in jeder anderen Form ausgestaltet sein.

Es ist bevorzugt, dass der Kältespeicher im Wesentlichen an einer äußeren Mantelfläche der thermischen Leitung angeordnet ist.

In einer besonders bevorzugten Ausgestaltungsform der Erfindung kann die Vorrichtung auch eine Karbonisierungsvorrichtung mit einem Karbonator zur Karbonisierung der Flüssigkeit sein. Dies ist besonders vorteilhaft, da so eine Kühlvorrichtung und eine Karbonisierungsvorrichtung in einer Einheit zusammen gefasst sind. Der Bedarf hierfür ist gegeben, da häufig Getränke vor dem Ausschank sowohl gekühlt als auch karbonisiert werden müssen. Auf diese Weise sind nicht mehrere Einheiten und Geräte notwendig, sondern diese beiden Funktionen sind zusammen in der oben beschriebenen Vorrichtung integriert.

In einem Karbonator wird die Flüssigkeit, beispielsweise Trinkwasser, unter Druck mit CO₂ versetzt. Dies kann in einem In-Line-Verfahren geschehen, bei dem die zu karbonisierende Flüssigkeit durch eine Mischkammer geleitet wird, in der den hindurchströmenden Flüssigkeit gasförmiges CO₂ zugeführt wird, welches bevorzugt unter einem Druck steht, der über dem Gleichgewichtsdruck des in der Flüssigkeit gelösten CO₂ bei der gegebenen Flüssigkeitstemperatur liegt. Die karbonisierte Flüssigkeit kann dann einem (weiteren) Vorratsbehälter zur Bevorratung und/oder einer Zapfstelle zu einer Entnahme aus der Vorrichtung zugeführt werden.

Dies kann aber auch in einem Windkessel geschehen, d.h. einem Vorratsbehälter, in dem die zu karbonisierende Flüssigkeit gespeichert ist und der mit CO₂ beaufschlagt wird. Dabei liegt der Gasdruck des dem Windkessel zugeführten CO₂ wiederum bevorzugt über dem Gleichgewichtsdruck von in der Flüssigkeit gelöstem CO₂ bei der gegebenen Temperatur der im Windkessel gespeicherten Flüssigkeit. Zu einer Entnahme der karbonisierten gekühlten Flüssigkeit aus der Vorrichtung kann die Flüssigkeit einer Zapfstelle zugeführt werden.

In einer besonders bevorzugten Ausgestaltung umfasst die Vorrichtung weiterhin eine Pumpe, mit der die der Mischkammer oder dem Windkessel zugeführte Flüssigkeit unter einen gegenüber Umgebungsdruck erhöhten Druck gesetzt wird. Insbesondere die die Pumpe dazu eingerichtet, die Flüssigkeit mit einem Druck zu beaufschlagen, der im Wesentlichen dem Gleichgewichtsdruck von CO₂, welches in der Flüssigkeit gelöst ist, bei der Temperatur entspricht, auf die die Flüssigkeit durch die thermische Wechselwirkung mit der thermischen Leitung gebracht wird. Diese Pumpe kann vor oder nach der Wechselwirkungsstrecke zwischen Flüssigkeit und thermischer Leitung angeordnet sein.

Zusätzlich sowie auch getrennt von der oben erläuterten Vorrichtung wird gemäß einem weiteren Gedanken der Erfindung eine Verwendung der obigen Vorrichtung als Bauteil für eine Vorratsanordnung zur Aufnahme der Flüssigkeit vorgeschlagen. Dabei ist besonders bevorzugt, dass die thermische Leitung als Wandung für die Vorratsanordnung ausgestaltet ist.

Weiterhin bevorzugt ist dabei, dass die thermische Leitung als Hohlzylinder ausgestaltet ist.

Jedoch kann die thermische Leitung auch in beliebiger anderer Form ausgestaltet sein.

Zusätzlich sind vorteilhafterweise Boden und Decke für die Wandung vorgesehen so dass sich ein abgeschlossener Vorratsraum im Inneren der thermischen Leitung ausbildet. Diese Anordnung hat den Vorteil, dass nicht zusätzlich zur thermischen Leitung ein separater Vorratsbehälter vorgesehen sein muss.

Bei dieser bevorzugten Verwendung kann somit die thermische Leitung direkt Wände eines Vorratsbehälters ausbilden, so dass weitere Bauteile eingespart werden können. Zudem hat die Wandung des Vorratsbehälters zugleich eine Kühlfunktion.

Weiterhin kann auch vorgesehen sein, dass die Vorrichtung zumindest teilweise als ein Gehäuse für einen Karbonator ausgestaltet ist, diesen umfasst oder aus diesem besteht.

Besonders bevorzugt ist dabei eine Hohlzylinderform, wobei die thermische Leitung als Hohlzylinder ausgebildet ist und eine Wandung, beziehungsweise eine Mantelfläche, eines Gehäuses für einen Karbonator bildet. Durch diese Ausgestal. tung kann die thermische Leitung zum einen zumindest teilweise ein Gehäuse für einen Karbonator ausbilden und zum anderen eine in das Gehäuse für den Karbonator integrierte Kühlung aufweisen.

Ein Ausführungsbeispiel in Form einer vorteilhaften Ausgestaltung und Weiterbildung ist in der nachfolgenden Figur angegeben.

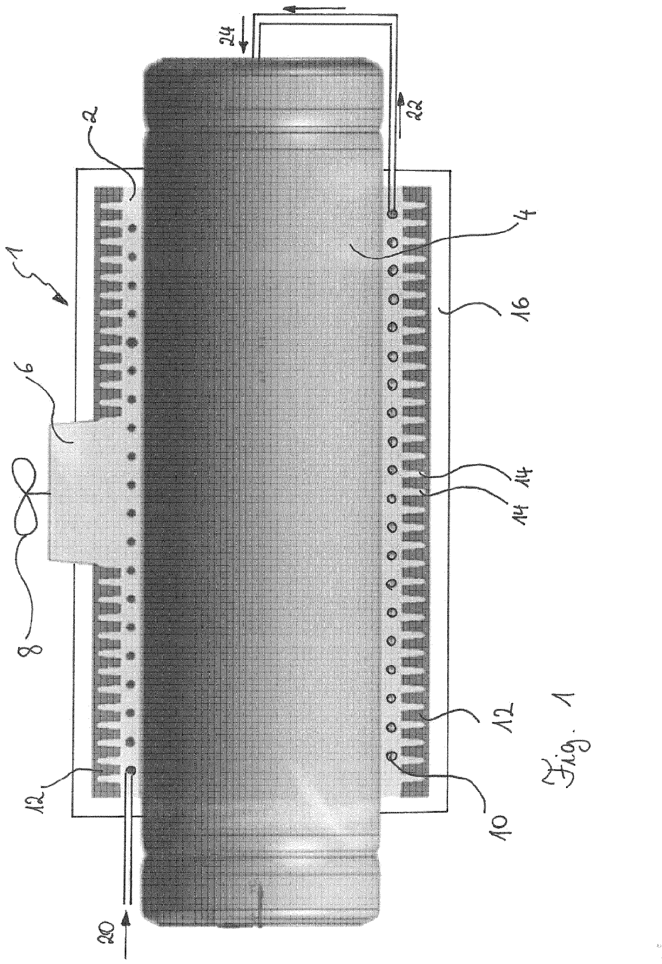

Figur 1 zeigt eine Kühlvorrichtung mit Vorratsbehälter.

Aus Figur 1 geht eine Kühlvorrichtung 1 hervor, bei der eine thermische Leitung 2 als Hohlzylinder ausgestaltet ist und einen Vorratsbehälter 4 umschließt. Die thermische Leitung 2 besteht dabei aus Aluminium und ist als Druckgusskörper ausgestaltet.

Die thermische Leitung 2 grenzt unmittelbar an ein Mittel zum Abführen von Wärme 6 aus der thermischen Leitung 2 an und steht mit diesen in thermischer Verbindung. Das Mittel zum Abführen von Wärme 6 ist hier schematisch als Block dargestellt. Bevorzugter Weise weist dieses jedoch einen Verdampfer oder ein Peltier-Element auf. An dem Mittel zum Abführen von Wärme 6 ist ein Ventilator 8 angeordnet, welcher durch Luftbewegung die Wärmeabfuhr unterstützt und damit das Abführen von Wärme aus der thermischen Leitung unterstützt.

Die thermische Leitung 2 weist einen wendelförmigen Kanal 10 auf, welcher sich als Spirale durch den Hohlzylinder erstreckt. Durch diese wendelförmige Leitung 10 wird die zu kühlende Getränkeflüssigkeit geleitet. Die zu kühlende Flüssigkeit und die thermische Leitung 2 stehen in thermischer Verbindung.

Die thermische Leitung 2 grenzt an einen Kältespeicher 12 an, wobei die äußere Mantelfläche der thermischen Leitung 2 Lamellen 14 aufweist. Der Kältespeicher 12 ist hier als in die Lamellen 14 der thermischen Leitung 2 eingebettete Struktur ausgebildet.

Beispielsweise kann der Kältespeicher 12 als Polymer mit gebundenem Phasenwechselmaterial vorliegen, wobei das Polymer bevorzugter Weise ein wärmeleitendes Additiv wie beispielsweise Graphit aufweist. Hierdurch wird die thermische Ankopplung des Kältespeichers 12 an die thermische Leitung 2 verbessert.

Durch die Lamellen 14 wird die Wärmeübertragungsfläche zwischen der thermischen Leitung und dem Kältespeicher vergrößert. Auch wird die thermische Ankopplung der thermischen Leitung an den Kältespeicher verbessert.

Die Kühlvorrichtung weist eine zusätzliche Isolierung 16 auf, die die Kühlvorrichtung 1 im Bereich des Kältespeichers 12 umgibt, so dass der Kältespeicher 12 im Wesentlichen nur Kälte an die thermische Leitung 2 abgeben kann. Hierdurch wird keine Kapazität des Kältespeichers verschwendet, um den Außenbereich der Vorrichtung zu kühlen, sondern es wird nur Kälte an die zu kühlende Flüssigkeit abgegeben.

Die Vorrichtung ist weiterhin dazu eingerichtet, dass das zu kühlende Getränk an einer Einlassseite 20 in die Kühlvorrichtung eingeleitet wird und an einer Auslassseite 22 die Kühlvorrichtung gekühlt verlässt.

Weiterhin ist vorgesehen, dass das gekühlte Getränk an einem Einlass in den Vorratsbehälter 24 eingeleitet wird. Der Vorratsbehälter 4 kann dabei verschiedenartig ausgestaltet sein. Zum einen kann dieser zum Vorhalten eines gekühlten Getränks eingerichtet sein, zum anderen kann dieser jedoch noch weitere Funktionen und Vorrichtungen enthalten, wie beispielsweise einen Karbonator zum Karbonisieren des gekühlten Getränkes (Karbonator ist nicht dargestellt).

Da ein Karbonator eine Vorrichtung ist, innerhalb der ein gewisser Druck aufgebaut wird um das Getränk mit Kohlensäure zu versetzen, kann weiterhin vorgesehen sein, dass die thermische Leitung dazu eingerichtet ist, für eine gewisse Druckstabilität des Vorratsbehälters 4 zu sorgen.

Die Figur 1 stellt den Vorratsbehälter 4 in der Draufsicht dar, die thermische Leitung 2 und die Anordnung mit dem Kältespeicher 12 und den Mitteln zum Kühlen 6 jedoch im Schnitt.

### Bezugszeichenliste

- 1: Kühlvorrichtung
- 2: Thermische Leitung
- 4: Vorratsbehälter
- 6: Mittel zum Abführen von Wärme
- 8: Ventilator
- 10: Leitung für Flüssigkeit
- 12: Kältespeicher
- 14: Lamellen
- 16: Isolierung
- 20: Einlassseite
- 22: Auslassseite
- 24: Einlass in Vorratsbehälter

## Patentansprüche

1. Vorrichtung (1) zum Kühlen eines flüssigen Nahrungsmittels, insbesondere eines Getränkes, aufweisend einen Kältespeicher (12) und eine thermische Leitung (2), wobei der Kältespeicher (12) und die zu kühlende Flüssigkeit über die thermische Leitung (2) in thermischer Verbindung stehen, und wobei der Kältespeicher (12) ein Phasenwechselmaterial aufweist, wobei die Vorrichtung weiterhin Mittel zum Abführen von Wärme (6) aus wenigstens der thermischen Leitung (2) aufweist
**dadurch gekennzeichnet, dass**
der Kältespeicher (12) ein Trägermaterial aufweist, in das das Phasenwechselmaterial eingebunden ist, wobei das Trägermaterial ein Polymer aufweist, das als Blockcopolymer vorliegt.

2. Vorrichtung (1) nach Anspruch 1, **dadurch gekennzeichnet, dass** das Phasenwechselmaterial ein Paraffin aufweist.

3. Vorrichtung (1) nach einem der vorhergehenden Ansprüche, **dadurch gekennzeichnet, dass** der Anteil des Trägermaterials in Bezug auf den Kältespeicher zwischen 1 und 10 Gew.% liegt.

4. Vorrichtung (1) nach einem der vorigen Ansprüche, **dadurch gekennzeichnet, dass** das Trägermaterial eine Matrix bildet, in die das Phasenwechselmaterial eingebunden ist.

5. Vorrichtung (1) nach einem der vorherigen Ansprüche, **dadurch gekennzeichnet, dass** der Kältespeicher (12) ein Additiv aufweist.

6. Vorrichtung (1) nach Anspruch 5, **dadurch gekennzeichnet, dass** das Additiv Graphit aufweist, insbesondere expandierten Graphit.

7. Vorrichtung (1) nach einem der vorherigen Ansprüche, **dadurch gekennzeichnet, dass** der Kältespeicher (12) und die thermische Leitung (2) wenigstens bereichsweise aneinander grenzen.

8. Vorrichtung (1) nach einem der vorherigen Ansprüche, **dadurch gekennzeichnet, dass** die thermische Leitung (2) eine integrale Struktur aufweist, um die Flüssigkeit zu führen.

9. Vorrichtung (1) nach einem der vorherigen Ansprüche, **dadurch gekennzeichnet, dass** die thermische Leitung (2) ein wärmeleitfähiges Material aufweist.

10. Vorrichtung (1) nach einem der vorhergehenden Ansprüche, **dadurch gekennzeichnet, dass** die thermische Leitung (2) eine Oberflächenstruktur zur Vergrößerung der effektiven Wärmeübertragungsfläche aufweist.

11. Vorrichtung (1) nach Anspruch 10, **dadurch gekennzeichnet, dass** die Oberflächenstruktur Lamellen (14) aufweist.

12. Vorrichtung (1) nach einem der Ansprüche 10 oder 11, **dadurch gekennzeichnet, dass** die Oberflächenstruktur wenigstens in einem ersten Bereich der thermischen Leitung (2) angeordnet ist, in der die thermische Leitung (2) und der Kältespeicher (12) aneinander angrenzen.

13. Vorrichtung (1) nach einem der vorhergehenden Ansprüche, **dadurch gekennzeichnet, dass** die Mittel zum Abführen von Wärme (6) ein thermoelektrisches Modul aufweisen.

14. Vorrichtung (1) nach einem der vorhergehenden Ansprüche, **dadurch gekennzeichnet, dass** die Mittel zum Abführen von Wärme (6) an die thermische Leitung (2) angrenzen.

15. Vorrichtung (1) nach einem der vorhergehenden Ansprüche, **dadurch gekennzeichnet, dass** die Mittel zum Abführen von Wärme (6) einen Ventilator (8) aufweist.

16. Vorrichtung (1) nach einem der vorhergehenden Ansprüche, **dadurch gekennzeichnet, dass** die Vorrichtung (1) eine Isolierung (16) aufweist, die an den Kältespeicher (12) angrenzt.

17. Vorrichtung (1) nach Anspruch 16, **dadurch gekennzeichnet, dass** die Isolierung (16) ein geschäumtes Material umfasst.

18. Vorrichtung (1) nach einem der vorherigen Ansprüche, **dadurch gekennzeichnet, dass** die Vorrichtung (1) einen Vorratsbehälter (4) zur Aufnahme der Flüssigkeit umfasst und dass die thermische Leitung (2) an den Vorratsbehälter (4) angrenzt.

19. Vorrichtung (1) nach einem der vorigen Ansprüche, **dadurch gekennzeichnet, dass** die thermische Leitung (2) als Hohlzylinder ausgestaltet ist.

20. Vorrichtung (1) nach Anspruch 19, **dadurch gekennzeichnet, dass** der Kältespeicher (12) an einer äußeren Mantelfläche des Hohlzylinders (2) angeordnet ist.

21. Vorrichtung (1) nach Anspruch 19 oder 20, **dadurch gekennzeichnet, dass** der Vorratsbehälter (4) innerhalb des Hohlzylinders (2) angeordnet ist, wobei der Hohlzylinder (2) den Vorratsbehälter (4) umschließt.

22. Vorrichtung (1) nach einem der vorherigen Ansprüche, **dadurch gekennzeichnet, dass** die Vorrichtung (1) eine Karbonisierungs-Vorrichtung mit einem Karbonator zur Karbonisierung der Flüssigkeit ist.

23. Verwendung einer Vorrichtung nach einem der Ansprüche 1 bis 22 als Bauteil für eine Vorratsanordnung zur Aufnahme der Flüssigkeit.

24. Verwendung nach Anspruch 23, **dadurch gekennzeichnet, dass** die thermische Leitung (2) als Wandung für die Vorratsanordnung ausgestaltet ist.

## Claims

1. A device (1) for cooling a liquid food, in particular a beverage, comprising a cold accumulator (12) and a thermal line (2), wherein the cold accumulator (12) and the liquid to be cooled are thermally connected via the thermal line (2), and wherein the cold accumulator (12) comprises a phase change material, wherein the device further comprises a means for dissipating heat (6) from at least the thermal line (2),
**characterized in that**
the cold accumulator (12) comprises a carrier material into which the phase change material is integrated, wherein the carrier material comprises a polymer, which is provided as a block copolymer.

2. The device (1) according to claim 1, **characterized in that** the phase change material comprises a paraffin.

3. The device (1) according to any one of the preceding claims, **characterized in that** the percentage of the carrier material relative to the cold accumulator is between 1 and 10% by weight.

4. The device (1) according to any one of the preceding claims, **characterized in that** the phase change material forms a matrix into which the phase change material is integrated.

5. The device (1) according to any one of the preceding claims, **characterized in that** the cold accumulator (12) comprises an additive.

6. The device (1) according to claim 5, **characterized in that** the additive comprises graphite, particularly expanded graphite.

7. The device (1) according to any one of the preceding claims, **characterized in that** the cold accumulator (12) and the thermal line (2) are adjacent to each other at least in some areas.

8. The device (1) according to any one of the preceding claims, **characterized in that** the thermal line (2) has an integral structure for guiding the liquid.

9. The device (1) according to any one of the preceding claims, **characterized in that** the thermal line (2) has a thermally conductive material.

10. The device (1) according to any one of the preceding claims, **characterized in that** the thermal line (2) has a surface structure for enlarging the effective heat transfer surface area.

11. The device (1) according to claim 10, **characterized in that** the surface structure has lamellas (14).

12. The device (1) according to any one of the claims 10 or 11, **characterized in that** the surface structure is disposed at least in a first surface of the thermal line (2) in which the thermal line (2) and the cold accumulator (12) are adjacent to each other.

13. The device (1) according to any one of the preceding claims, **characterized in that** the means for dissipating heat (6) comprise a thermoelectric module.

14. The device (1) according to any one of the preceding claims, **characterized in that** the means for dissipating heat (6) are adjacent to the thermal line (2).

15. The device (1) according to any one of the preceding claims, **characterized in that** the means for dissipating heat (6) comprise a fan (8).

16. The device (1) according to any one of the preceding claims, **characterized in that** the device (1) comprises an insulation (16) adjacent to the cold accumulator (12).

17. The device (1) according to claim 16, **characterized in that** the insulation (16) includes a foamed material.

18. The device (1) according to any one of the preceding claims, **characterized in that** the device (1) comprises a storage container (4) for accommodating the liquid, and that the thermal line (2) is adjacent to the storage container (4).

19. The device (1) according to any one of the preceding claims, **characterized in that** the thermal line (2) is configured as a hollow cylinder.

20. The device (1) according to claim 19, **characterized in that** the cold accumulator (12) is disposed on an outer lateral surface of the hollow cylinder (2).

21. The device (1) according to claim 19 or 20, **characterized in that** the storage container (4) is disposed within the hollow cylinder (2), wherein the hollow cylinder (2) encloses the storage container (4).

22. The device (1) according to any one of the preceding claims, **characterized in that** the device (1) is a carbonating device with a carbonator for carbonating the liquid.

23. Use of a device according to any one of the claims 1 to 22 as a component for a storage assembly for accommodating the liquid.

24. Use according to claim 23, **characterized in that** the thermal line (2) is configured as a wall for the storage assembly.

## Revendications

1. Dispositif (1) de refroidissement d'un aliment liquide, en particulier d'une boisson, comprenant un accumulateur de froid (12) et une ligne thermique (2), dans lequel ledit accumulateur de froid (12) et le liquide à refroidir sont en communication thermique via ladite ligne thermique (2), et dans lequel l'accumulateur de froid (12) comprend un matériau à changement de phase, dans le quel le dispositif comprend en outre des moyens pour dissiper de la chaleur (6) d'au moins la ligne thermique (2), **caractérisé par le fait que** l'accumulateur de froid (12) présente un matériau support dans lequel le matériau à changement de phase est incorporé, le matériau support présentant un polymère qui est présent sous la forme d'un copolymère en bloc.

2. Dispositif (1) selon la revendication 1, **caractérisé par le fait que** le matériau à changement de phase comprend une paraffine.

3. Dispositif (1) selon l'une quelconque des revendications précédentes, **caractérisé par le fait que** la proportion du matériau support par rapport à l'accumulateur de froid est comprise entre 1 et 10 % en poids.

4. Dispositif (1) selon l'une quelconque des revendications précédentes, **caractérisé par le fait que** le matériau support forme une matrice dans laquelle le matériau à changement de phase est incorporé.

5. Dispositif (1) selon l'une quelconque des revendications précédentes, **caractérisé par le fait que** l'accumulateur de froid (12) comprend un additif.

6. Dispositif (1) selon la revendication 5, **caractérisé par le fait que** l'additif comprend du graphite, en particulier du graphite expansé.

7. Dispositif (1) selon l'une quelconque des revendications précédentes, **caractérisé par le fait que** l'accumulateur de froid (12) et la ligne thermique (2) sont contigus l'un à l'autre au moins par zones.

8. Dispositif (1) selon l'une quelconque des revendications précédentes, **caractérisé par le fait que** la ligne thermique (2) présente une structure intégrale pour guider le liquide.

9. Dispositif (1) selon l'une quelconque des revendications précédentes, **caractérisé par le fait que** la ligne thermique (2) comprend un matériau conducteur de chaleur.

10. Dispositif (1) selon l'une quelconque des revendications précédentes, **caractérisé par le fait que** la ligne thermique (2) présente une structure de surface pour augmenter la surface efficace de transfert de chaleur.

11. Dispositif (1) selon la revendication 10, **caractérisé par le fait que** la structure de surface comprend des lamelles (14).

12. Dispositif (1) selon l'une quelconque des revendications 10 ou 11, **caractérisé par le fait que** la structure de surface est disposée au moins dans une première face de la ligne thermique (2), dans laquelle la ligne thermique (2) et l'accumulateur de froid (12) sont contigus l'un à l'autre.

13. Dispositif (1) selon l'une quelconque des revendications précédentes, **caractérisé par le fait que** les moyens de dissipation de chaleur (6) comprennent un module thermoélectrique.

14. Dispositif (1) selon l'une quelconque des revendications précédentes, **caractérisé par le fait que** les moyens de dissipation de chaleur (6) sont contigus à la ligne thermique (2).

15. Dispositif (1) selon l'une quelconque des revendications précédentes, **caractérisé par le fait que** les moyens de dissipation de chaleur (6) comprennent un ventilateur (8).

16. Dispositif (1) selon l'une quelconque des revendications précédentes, **caractérisé par le fait que** le dispositif (1) comprend une isolation (16) qui est contiguë à l'accumulateur de froid (12).

17. Dispositif (1) selon la revendication 16, **caractérisé par le fait que** l'isolation (16) comprend un matériau en mousse.

18. Dispositif (1) selon l'une quelconque des revendications précédentes, **caractérisé par le fait que** le dispositif (1) comprend un réservoir (4) destiné à recevoir le liquide et que la ligne thermique (2) est contiguë au réservoir (4).

19. Dispositif (1) selon l'une quelconque des revendications précédentes, **caractérisé par le fait que** la ligne thermique (2) est réalisée en tant que cylindre creux.

20. Dispositif selon la revendication 19, **caractérisé par le fait que** l'accumulateur de froid (1) est agencé sur une surface latérale extérieure du cylindre creux (2).

21. Dispositif (1) selon la revendication 19 ou 20, **caractérisé par le fait que** le réservoir (4) est agencé à l'intérieur du cylindre creux (2), dans lequel le cylindre creux (2) renferme le réservoir (4).

22. Dispositif (1) selon l'une quelconque des revendications précédentes, **caractérisé par le fait que** le dispositif (1) est un dispositif de carbonatation comprenant un carbonateur destiné à carbonater le liquide.

23. Utilisation d'un dispositif selon l'une quelconque des revendications 1 à 22, en tant que composant pour un ensemble de stockage destiné à recevoir le liquide.

24. Utilisation selon la revendication 23, **caractérisée par le fait que** la ligne thermique (2) est conçue en tant que paroi pour ledit ensemble de stockage.
